# FASCICULE DE BREVET EUROPEEN

(11) **EP 3 888 048 B1**
(45) Date de publication et mention de la délivrance du brevet: **19.10.2022**
(21) Numéro de dépôt: 19798691.2
(22) Date de dépôt: 13.11.2019
(51) Int. Cl.: G06T 3/40

(54) **DISPOSITIF ET PROCÉDÉ DE SUPER-RÉSOLUTION**
HOCHAUFLÖSUNGSVORRICHTUNG UND -VERFAHREN
SUPER-RESOLUTION DEVICE AND METHOD

(30) Priorité: 29.11.2018 FR 1872045
(43) Date de publication de la demande: 06.10.2021
(73) Titulaire: Commissariat à l'Energie Atomique et aux Energies Alternatives, 75015 Paris (FR)
(72) Inventeur: SEDDIK, Mohamed El Amine, 91120 PALAISEAU (FR); TAMAAZOUSTI, Mohamed, 92140 CLAMART (FR); LIN, John, 91300 MASSY (FR)
(74) Mandataire: Atout PI Laplace
(86) Numéro de dépôt international: PCT/EP2019/081233
(87) Numéro de publication internationale: WO 2020/109001

(56) Documents cités:
- XU XIANGYU ET AL: "Learning to Super-Resolve Blurry Face and Text Images", 2017 IEEE INTERNATIONAL CONFERENCE ON COMPUTER VISION (ICCV), IEEE, 22 octobre 2017 (2017-10-22), pages 251-260, XP033282879, DOI: 10.1109/ICCV.2017.36
- ZHIFEI ZHANG ET AL: "Reference-Conditioned Super-Resolution by Neural Texture Transfer", ARXIV.ORG, CORNELL UNIVERSITY LIBRARY, 201 OLIN LIBRARY CORNELL UNIVERSITY ITHACA, NY 14853, 10 avril 2018 (2018-04-10), XP080869215,

## Description

L'invention concerne le domaine de la production d'images à haute résolution et porte sur un dispositif et un procédé de conversion d'images basse résolution en images haute résolution. Autrement dit, l'invention concerne le problème de la super-résolution qui consiste à augmenter la résolution d'une image. L'invention concerne également le domaine des réseaux de neurones artificiels et l'optimisation de tels réseaux de neurones via des méthodes d'apprentissage dans le but de résoudre le problème de la super-résolution.

Dans le domaine général du traitement d'images, le problème de la super-résolution concerne la reconstruction de détails dans une image acquise à une résolution donnée basse afin de générer une version de cette image à une résolution plus élevée.

Une approche possible pour résoudre le problème de la super-résolution consiste à utiliser l'intelligence artificielle et plus précisément les réseaux de neurones artificiels ou les méthodes d'apprentissage de tels réseaux.

L'article scientifique "Generative Adversarial Networks, I. Goodfellow et al. Advances in Neural Information Processing Systems 27, 2014" décrit le principe de réseaux de neurones artificiels dits antagonistes génératifs ou « Generative Adversarial Networks » en anglais. Ce type de réseau comporte deux sous-réseaux. Un premier sous-réseau, dit générateur, a pour fonction de générer un échantillon (par exemple une image) à partir d'une donnée de référence. Un second sous-réseau, dit discriminateur, a pour fonction de discriminer un échantillon comme étant une donnée de référence ou un échantillon généré par le premier sous-réseau. Les deux sous-réseaux sont optimisés par apprentissage non-supervisé. Appliqué au domaine de la super-résolution, ils permettent de générer des images à haute résolution à partir d'images basse résolution. Cependant, un inconvénient de ces réseaux est que le critère d'optimisation utilisé est une comparaison directe entre une image de référence et une image reconstruite. Ce type de critère n'est pas suffisamment précis pour apprendre à reconstruire des images de n'importe quel type. En effet, le critère d'optimisation est basé sur une distance du type norme L2 (ou erreur quadratique) entre les pixels respectifs de l'image de référence et de l'image reconstruite. Ce type de critère constitue une comparaison dans le domaine des images. Il n'est pas satisfaisant car il induit des effets de flou sur les images reconstruites. Cela est notamment démontré dans les articles « Photo-realistic single image super-resolution using a generative adversarial network, C. Ledig et al, arXiv preprint » et « A modified psnr metric based on hvs for quality assessment of color images, P.Gupta et al, Communication and industrial application (ICCIA) ».

L'article scientifique " Photo-realistic single image super-resolution using a generative adversarial network, C. Ledig et al, computer vision and pattern récognition, 2017 " propose une amélioration du principe décrit dans l'article précédent. Le sous-réseau discriminateur est optimisé par apprentissage pour classifier un ensemble d'images de référence issues d'un set d'images donné, en fonction de leur contenu. Un autre réseau de neurones est utilisé pour apprendre des caractéristiques relatives aux images haute résolution. L'apprentissage de ces caractéristiques est effectué sur un ensemble limité d'images de références issues d'une base de données d'images appelée ImageNet. Ces caractéristiques sont ensuite utilisées pour calculer le critère d'erreur du sous-réseau générateur, toujours en utilisant un calcul d'erreur utilisant la norme L2. Autrement dit, l'erreur entre l'image générée par le sous-réseau générateur et l'image d'origine est calculée dans le domaine des caractéristiques extraites par apprentissage sur la base de données ImageNet et non plus directement dans le domaine des images.

L'invention propose d'améliorer encore la technique décrite dans l'article précité par une optimisation différente du sous-réseau discriminateur et un fonctionnement conjoint du sous-réseau discriminateur et du sous-réseau générateur. L'apprentissage des deux sous-réseaux est effectué en parallèle, les caractéristiques des images haute résolution sont extraites en cours d'apprentissage du sous-réseau discriminateur et sont utilisées pour améliorer l'apprentissage du sous-réseau générateur. De par une optimisation conjointe des deux sous-réseaux, l'invention permet d'améliorer la précision de reconstruction des images haute résolution générées et ainsi d'apporter une solution au problème général de la super-résolution. Par ailleurs, un avantage de l'invention est qu'elle permet de construire des caractéristiques d'images haute résolution qui sont adaptées au domaine cible des images traitées. Contrairement à la méthode précitée qui exploite des caractéristiques apprises, au préalable, sur un domaine de référence limité qui n'est pas adapté à des images de natures différentes.

L'invention concerne un dispositif de super-résolution selon la revendication 1.

Selon un aspect particulier de l'invention, la phase d'apprentissage du premier réseau est réalisée pour un ensemble d'images produites en entrée du premier réseau et prises parmi un premier ensemble d'images de référence à la seconde résolution haute et/ou un second ensemble d'images générées par le second réseau à la seconde résolution haute durant la phase d'apprentissage du second réseau.

Selon un aspect particulier de l'invention, le premier réseau est un réseau classifieur configuré pour classifier des images selon leur appartenance audit premier ensemble d'images ou audit second ensemble d'images.

Selon un aspect particulier de l'invention, le premier réseau est un réseau auto-encodeur configuré pour reconstruire une image d'entrée.

Selon un aspect particulier de l'invention, le premier réseau comprend un premier sous-réseau codeur, un deuxième sous-réseau décodeur dont la couche d'entrée est connectée à la couche de sortie du premier sous-réseau codeur et un troisième sous-réseau classifieur dont la couche d'entrée est connectée à la couche de sortie du premier sous-réseau codeur, le premier sous-réseau codeur et le deuxième sous-réseau décodeur formant un réseau auto-encodeur configuré pour reconstruire l'image d'entrée, le premier sous-réseau codeur et le troisième sous-réseau classifieur formant un réseau classifieur configuré pour classifier des images selon leur appartenance audit premier ensemble d'images ou audit second ensemble d'images.

Selon un aspect particulier de l'invention, le dispositif selon l'invention est configuré pour exécuter plusieurs itérations des apprentissages successifs du premier réseau et du second réseau.

Selon un aspect particulier de l'invention, l'ensemble d'images produites en entrée du premier réseau est le premier ensemble d'images de référence.

L'invention a aussi pour objet un procédé d'apprentissage d'un réseau de neurones artificiels selon la revendication 9.

Selon une variante de réalisation, le procédé d'apprentissage selon l'invention comprend une étape de calcul desdites projections respectives par extraction des valeurs de sortie des neurones de la couche du premier réseau correspondant au vecteur de caractéristiques.

Selon une variante de réalisation, l'entrainement du premier réseau est réalisé pour un ensemble d'images produites en entrée du premier réseau et prises parmi un premier ensemble d'images de référence à la seconde résolution haute et/ou un second ensemble d'images générées par le second réseau à la seconde résolution haute durant la phase d'apprentissage du second réseau.

Selon une variante de réalisation, le premier réseau est entrainé pour classifier des images selon leur appartenance audit premier ensemble d'images ou audit second ensemble d'images et/ou pour reconstruire une image d'entrée.

Selon une variante de réalisation, le procédé d'apprentissage selon l'invention comprend plusieurs itérations des étapes successives d'entrainement du premier réseau et d'entrainement du second réseau.

L'invention porte aussi sur un procédé de super-résolution comprenant la conversion d'au moins une image à une première résolution basse en une image générée à une seconde résolution haute au moyen d'un réseau de neurones artificiels entrainé par le procédé d'apprentissage selon l'invention.

L'invention porte aussi sur un programme d'ordinateur téléchargeable depuis un réseau de communication et/ou enregistré sur un support lisible par ordinateur et/ou exécutable par un processeur, caractérisé en ce qu'il comprend des instructions de code pour l'exécution des étapes d'un procédé selon l'invention, lorsque ledit programme est exécuté sur un ordinateur.

L'invention porte aussi sur un réseau de neurones artificiels configuré pour convertir une image à une première résolution basse en une image générée à une seconde résolution haute, ledit réseau étant entrainé par le procédé d'apprentissage selon l'invention.

Les dessins annexés illustrent l'invention :
[Fig.1] La figure 1 schématise un exemple de réseau de neurones artificiels,
[Fig.2] La figure 2 schématise un exemple de dispositif de conversion d'images selon l'invention,
[Fig.3] La figure 3 schématise un exemple de dispositif de conversion d'images selon une première variante de réalisation de l'invention,
[Fig.4] La figure 4 schématise un exemple de dispositif de conversion d'images selon une deuxième variante de réalisation de l'invention,
[Fig.5] La figure 5 schématise un exemple de dispositif de conversion d'images selon une troisième variante de réalisation de l'invention,
[Fig.6] La figure 6 schématise, sur un organigramme, les étapes de mise en œuvre d'un procédé de conversion d'images selon l'une quelconque des variantes de réalisation de l'invention,

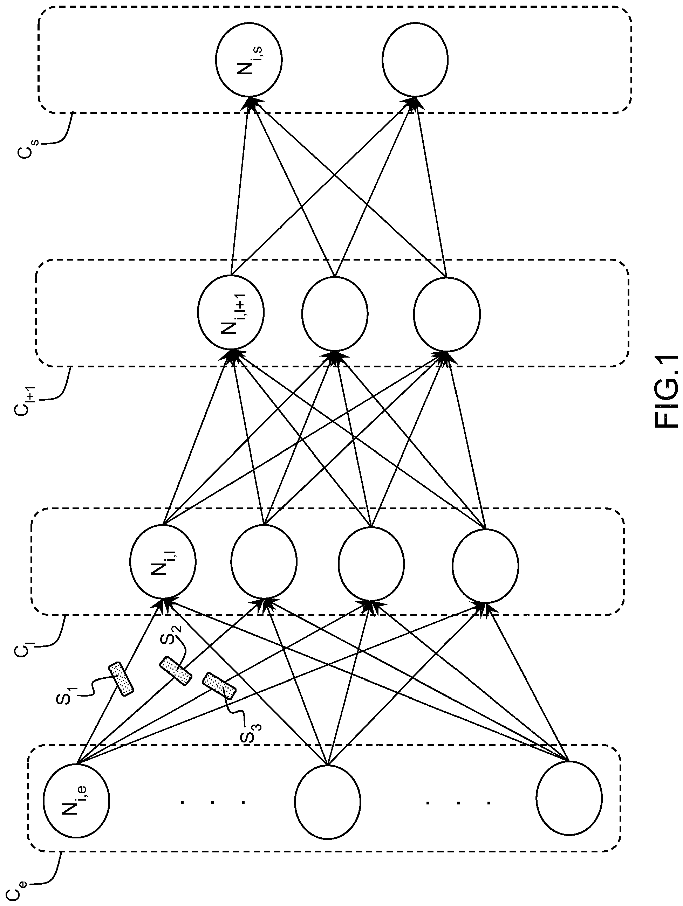

La figure 1 représente un schéma général d'un réseau de neurones artificiels, par exemple un réseau de neurones convolutionnel. Un réseau de neurones est classiquement composé de plusieurs couches Cₑ,Cₗ,Cₗ₊₁,Cₛ de neurones interconnectés. Le réseau comporte au moins une couche d'entrée Cₑ et une couche de sortie Cₛ et au moins une couche intermédiaire Cₗ,Cₗ₊₁. Les neurones Nᵢ,ₑ de la couche d'entrée Cₑ reçoivent chacun en entrée une donnée d'entrée. Les données d'entrée peuvent être de natures différentes selon l'application visée. Dans le contexte de l'invention, les données d'entrée sont des pixels d'une image. Un réseau de neurones a pour fonction générale d'apprendre à résoudre un problème donné qui peut être notamment un problème de classification mais pas uniquement. Un réseau de neurones est, par exemple, utilisé dans le domaine de la classification d'image ou de la reconnaissance d'image ou plus généralement la reconnaissance de caractéristiques qui peuvent être visuelles, audio ou les deux à la fois. Chaque neurone d'une couche est connecté, par son entrée et/ou sa sortie, à tous les neurones de la couche précédente ou suivante. Plus généralement un neurone peut n'être connecté qu'à une partie des neurones d'une autre couche, notamment dans le cas d'un réseau convolutionnel. Les connexions entre deux neurones N_{i,e}, N_{i,l} de deux couches successives se font à travers des synapses artificielles S₁,S₂,S₃ qui peuvent être réalisées, notamment, par des mémoires numériques ou par des dispositifs memristifs. Les coefficients des synapses peuvent être optimisés grâce à un mécanisme d'apprentissage du réseau de neurones. Le mécanisme d'apprentissage a pour objectif l'entrainement du réseau de neurones à résoudre un problème défini. Ce mécanisme comporte deux phases distinctes, une première phase de propagation de données de la couche d'entrée vers la couche de sortie et une seconde phase de rétro-propagation d'erreurs de la couche de sortie vers la couche d'entrée avec, pour chaque couche, une mise à jour des poids des synapses. Les erreurs calculées par les neurones de sortie à l'issue de la phase de propagation de données sont liées au problème à résoudre. Il s'agit, de manière générale, de déterminer une erreur entre la valeur d'un neurone de sortie et une valeur attendue ou une valeur cible en fonction du problème à résoudre.

Lors de la première phase de propagation de données, des données d'apprentissage, par exemple des images ou séquences d'images de référence, sont fournies en entrée des neurones de la couche d'entrée et propagées dans le réseau. Chaque neurone met en œuvre, pendant cette première phase, une fonction d'intégration des données reçues qui consiste, dans le cas d'un réseau convolutionnel, à calculer une somme des données reçues pondérées par les coefficients des synapses. Autrement dit, chaque neurone réalise une opération de convolution sur une taille de filtre de convolution correspondant à la taille de la sous-matrice de neurones de la couche précédente auxquels il est connecté. Chaque neurone propage ensuite le résultat de la convolution vers les neurones de la couche suivante. Selon les modèles de neurones choisis, la fonction d'intégration qu'il réalise peut varier.

Les neurones N_{i,s} de la couche de sortie Cₛ exécutent un traitement supplémentaire en ce qu'ils calculent une erreur entre la valeur de sortie du neurone N_{i,s} et une valeur attendue ou une valeur cible qui correspond à l'état final du neurone de la couche de sortie que l'on souhaite obtenir en relation avec les données d'entrée d'apprentissage et le problème à résoudre par le réseau. Par exemple, si le réseau doit résoudre un problème de classification, l'état final attendu d'un neurone correspond à la classe qu'il est censé identifier dans les données d'entrée.

Lors de la seconde phase de rétro-propagation d'erreurs, les neurones de la couche de sortie Cₛ transmettent les erreurs calculées aux neurones de la couche précédente Cₗ₊₁ qui calculent une erreur locale à partir de l'erreur rétro-propagée de la couche précédente et transmettent à leur tour cette erreur locale à la couche précédente Cₗ. En parallèle, chaque neurone calcule, à partir de l'erreur locale, une valeur de mise à jour des poids des synapses auxquelles il est connecté et met à jour les synapses. Le processus se poursuit pour chaque couche de neurones jusqu'à l'avant dernière couche qui est chargée de mettre à jour les poids des synapses qui la relient à la couche d'entrée Cₑ.

L'invention se base sur une utilisation particulière de différents types de réseaux de neurones artificiels pour résoudre un problème de conversion d'une image basse résolution en une image haute résolution. Les principes généraux introduits ci-dessus servent à introduire les notions de base utilisées pour mettre en œuvre l'invention.

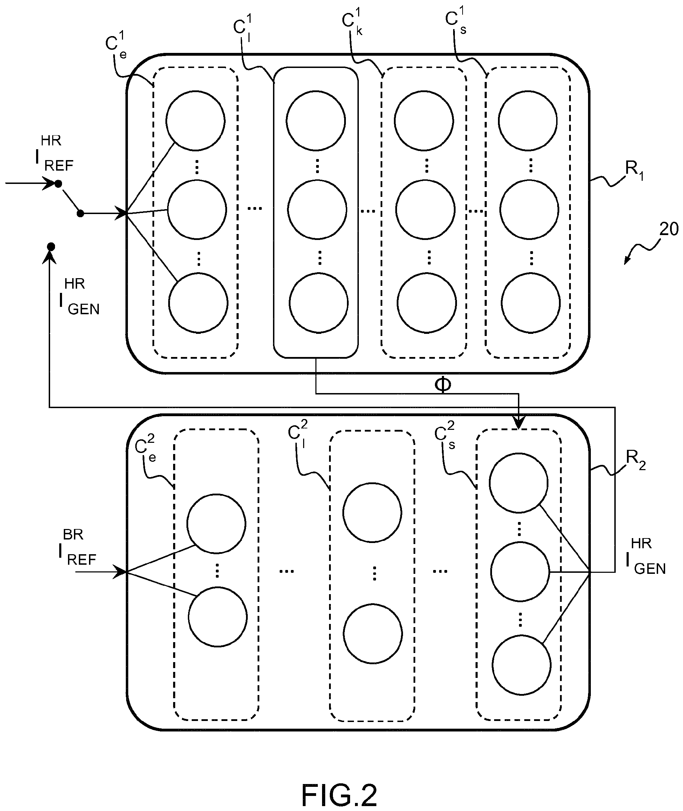

La figure 2 schématise un exemple de dispositif 200 de conversion d'images basse résolution en images haute résolution selon l'invention. Précisément, il s'agit de convertir des images d'entrée reçues à une première résolution basse, en images de sortie générées à une seconde résolution haute, plus élevée que la première résolution.

Le dispositif 200 comprend deux réseaux de neurones artificiels R₁,R₂, préférablement des réseaux de neurones convolutionnels. Le second réseau R₂ a pour fonction la conversion d'images basse résolution en images haute résolution. Pour déterminer cette fonction de conversion, qui correspond à la fonction de transfert finale du réseau R₂, celui-ci apprend la fonction de conversion durant une phase d'entrainement ou d'apprentissage. Lors de cette phase d'apprentissage, plusieurs images de référence I^{BR}_{REF} basse résolution sont fournies en entrée du réseau. Le mécanisme d'apprentissage est exécuté pour chaque image reçue en entrée du réseau. Typiquement, la couche d'entrée C²ₑ comporte autant de neurones que de pixels d'une image d'entrée basse résolution. Autrement dit, la dimension de la couche d'entrée est égale à la dimension de l'image à la première résolution basse. Les images de référence I^{BR}_{REF} basse résolution peuvent être obtenues à partir des mêmes images de référence haute résolution via une opération de compression qui permet de réduire la résolution de l'image. Alternativement, les images de référence peuvent être disponibles directement dans la première résolution basse et dans la seconde résolution haute.

Comme explicité précédemment, le mécanisme d'apprentissage comprend une première phase de propagation des données de la couche d'entrée vers la couche de sortie puis une seconde phase de rétro-propagation d'erreurs calculées par la couche de sortie vers la couche d'entrée.

Le second réseau de neurones R₂ comprend une couche de sortie C²ₛ qui comporte un nombre de neurones de sortie égal au nombre de pixels d'une image de sortie à la seconde résolution haute. Ainsi, le nombre de neurones de sortie est typiquement plus élevé que le nombre de neurones d'entrée. Le réseau R₂ comprend également une ou plusieurs couche(s) intermédiaire(s) C²ₗ. Typiquement, les couches intermédiaires comportent un nombre de neurones qui croit progressivement entre le nombre de neurones de la couche d'entrée et le nombre de neurones de la couche de sortie. Avantageusement, le réseau R₂ est un réseau convolutionnel. Chaque neurone d'une couche intermédiaire et de la couche de sortie réalise une opération de convolution de dimension égale à la taille du noyau de convolution qui correspond au nombre de connexions en entrée d'un neurone. Typiquement, la dimension du noyau de convolution correspond à des blocs de pixels dans l'image, par exemple des blocs carrés de dimension nxn ou des blocs rectangulaires de dimension nxm. Globalement, le réseau R₂ réalise des opérations successives de convolution et de suréchantillonnage afin d'augmenter progressivement la résolution de l'image depuis la première résolution basse d'entrée jusqu'à la seconde résolution haute de sortie.

La fonction de transfert du réseau R₂ est déterminée par les valeurs des poids des synapses, ou coefficients synaptiques (non représentés sur la figure 2). Un coefficient synaptique est associé à chaque connexion entre deux neurones de deux couches successives.

Pour réaliser l'apprentissage du réseau R₂ de manière à ce que sa fonction de transfert soit une fonction de conversion d'images basse résolution en images haute résolution, à l'issue de la phase de propagation de données vers la couche de sortie C²ₛ, les neurones de sortie déterminent une erreur E=∥Φ(I^{HR}_{REF})-Φ(I^{HR}_{GEN})∥ entre l'image haute résolution I^{HR}_{GEN} générée en sortie du réseau (qui correspond aux valeurs des neurones de sortie) et l'image haute résolution de référence I^{HR}_{REF} qui est l'image attendue. Un objectif de l'apprentissage est que les images générées I^{HR}_{GEN} approchent au mieux les images d'origine I^{HR}_{REF}. Pour cela, le critère d'erreur E choisi est une erreur entre les projections respectives des images I^{HR}_{GEN} et I^{HR}_{REF} dans un espace de caractéristiques des images haute résolution. Autrement dit, la fonction Φ est un vecteur de caractéristiques qui définit un espace de projection. Il s'agit ici de caractéristiques générales qui permettent de définir les images haute résolution de façon générale, c'est-à-dire, quels sont les éléments qui caractérisent une image haute résolution par rapport à une image basse résolution. A titre d'exemple, une caractéristique des images basse résolution est le flou. De la même manière, il est possible de déterminer certaines caractéristiques intrinsèques aux images haute résolution, autrement dit qui caractérisent la haute résolution. Ainsi, l'invention propose d'entrainer le réseau R₂ en déterminant l'erreur d'apprentissage dans le domaine de ces caractéristiques et non directement dans le domaine des images. L'erreur E est, par exemple, une norme L2, une erreur quadratique moyenne ou toute autre distance mathématique appropriée permettant de calculer une erreur entre deux vecteurs de données.

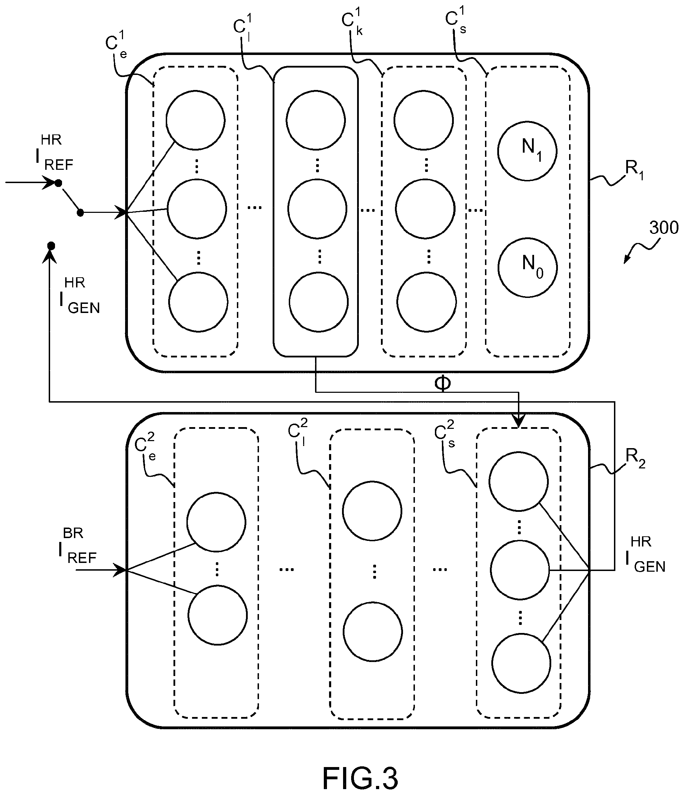

Le vecteur des caractéristiques Φ est déterminé au cours de l'apprentissage du premier réseau de neurones artificiels R₁. Le premier réseau R₁ a pour fonction de produire un vecteur de caractéristiques pertinentes des images haute résolution en général. Il peut prendre plusieurs formes comme cela sera explicité par la suite pour les variantes de réalisation des figures 3,4 et 5. De manière générale, le problème à résoudre par le premier réseau R₁ consiste à déterminer des caractéristiques générales des images haute résolution. Au cours de l'apprentissage du réseau R₁, le vecteur des caractéristiques Φ est extrait des poids synaptiques de la première couche du réseau, autrement dit des derniers poids synaptiques mis à jour lors de la phase de rétro-propagation d'erreurs. Un avantage à l'utilisation des poids synaptiques de la première couche est qu'ils correspondent à des taches bas niveau qui permettent de mieux caractériser les images haute résolution.

Lors de son apprentissage, le premier réseau R₁ peut recevoir, selon les modes de réalisation qui seront explicités plus bas, soit uniquement des images de référence haute résolution I^{HR}_{REF}, soit uniquement des images haute résolution I^{HR}_{GEN} générées par le second réseau R₂, soit les deux à la fois. Plus précisément, l'apprentissage du premier réseau R₁ se déroule de la façon suivante. Pour chaque image reçue en entrée, qui est soit une image de référence soit une image générée par le second réseau, le premier réseau R₁ exécute un apprentissage comprenant une phase de propagation des données extraites de l'image vers la couche de sortie C¹ₛ, un calcul d'erreurs par les neurones de la couche de sortie, selon l'objectif visé par le premier réseau, et une phase de rétro-propagation des erreurs vers les couches antérieures jusqu'à la couche d'entrée C¹ₑ avec mise à jour des poids synaptiques de chaque couche, à partir des erreurs rétro-propagées. A l'issue d'une passe d'apprentissage pour une image reçue en entrée, une mise à jour du vecteur des caractéristiques Φ est disponible. Cette mise à jour est transmise au second réseau R₂, à une fréquence prédéterminée, pour améliorer son apprentissage. De la même façon, les images générées par le second réseau R₂ après la mise à jour du vecteur Φ sont introduites dans le groupe d'images produit en entrée du premier réseau R₁ pour alimenter l'apprentissage du premier réseau. Autrement dit les apprentissages des deux réseaux R₁,R₂ sont réalisés conjointement et de façon itérative, le premier réseau transmettant au second réseau un vecteur Φ qui évolue au cours de l'apprentissage du premier réseau pour améliorer l'apprentissage du second réseau.

Le calcul des projections respectives des images I^{HR}_{GEN} et I^{HR}_{REF} dans l'espace défini par le vecteur Φ peut être déterminé en produisant l'image respective en entrée du premier réseau R₁ puis en extrayant les valeurs des sorties des neurones de la première couche, qui est associée au vecteur Φ. Le vecteur Φ étant lu sur les synapses de la première couche, les projections des images sont lues sur les neurones de la seconde couche qui sont connectés à ces synapses.

Une caractéristique importante de l'invention est, ainsi, que l'apprentissage du second réseau est réalisé à partir d'un vecteur Φ de caractéristiques relatives aux images haute résolution qui est produit par le premier réseau au cours de son apprentissage. Autrement dit le vecteur Φ évolue au cours du temps et au cours de l'apprentissage du second réseau de manière à améliorer progressivement l'apprentissage du second réseau.

Les figures 3,4 et 5 schématisent trois modes de réalisation différents de l'invention pour lesquels le premier réseau R₁ est différent dans chaque mode de réalisation tandis que le second réseau R₂ est identique et commun aux trois modes de réalisation.

La figure 3 schématise un premier mode de réalisation du dispositif 300 selon l'invention dans lequel le premier réseau R₁ est un réseau classifieur, le second réseau R₂ étant identique à celui de la figure 2.

Le premier réseau R₁ a pour fonction de classifier les images reçues en entrée en deux classes correspondant respectivement aux images de référence originales I^{HR}_{REF} et aux images I^{HR}_{GEN} générées par le second réseau R₂. Autrement dit, le premier réseau R₁ est entrainé pour différencier ces deux types d'images. Ainsi, dans ce premier mode de réalisation, le premier réseau R₁ reçoit à la fois des images de référence originales I^{HR}_{REF} et des images I^{HR}_{GEN} générées par le second réseau R₂ qui sont produites alternativement en entrée de la couche d'entrée C¹ₑ. La couche de sortie C¹ₛ du premier réseau R₁ comporte deux neurones de sortie N₀, N₁ qui correspondent respectivement à la classe des images de référence originales I^{HR}_{REF} et à la classe des images I^{HR}_{GEN} générées par le second réseau R₂. Pour chaque image traitée par le mécanisme d'apprentissage, les neurones de sortie calculent une erreur entre le résultat obtenu et le résultat attendu. Par exemple, la valeur d'un neurone de sortie est comprise entre 0 et 1, une valeur égale à 1 signifiant que l'image d'entrée appartient à la classe représentée par le neurone de sortie et une valeur égale à 0 signifiant que l'image d'entrée n'appartient pas à la classe représentée par le neurone de sortie. Une erreur peut ainsi être calculée pour chaque image et chaque neurone de sortie entre la valeur attendue, connaissant la nature de l'image reçue et la valeur réelle du neurone de sortie. En utilisant cette règle d'apprentissage, les poids synaptiques sont mis à jour au fur et à mesure de l'apprentissage. L'entrainement du premier réseau R₁ à la discrimination entre les deux types d'images, image d'origine ou image générée par le second réseau, permet d'élaborer, sur les poids synaptiques d'une couche du premier réseau R₁, un vecteur Φ de caractéristiques pertinentes pour représenter les images de haute résolution en général. Ce vecteur Φ est utilisé pour l'apprentissage du second réseau R₂ de la façon décrite précédemment.

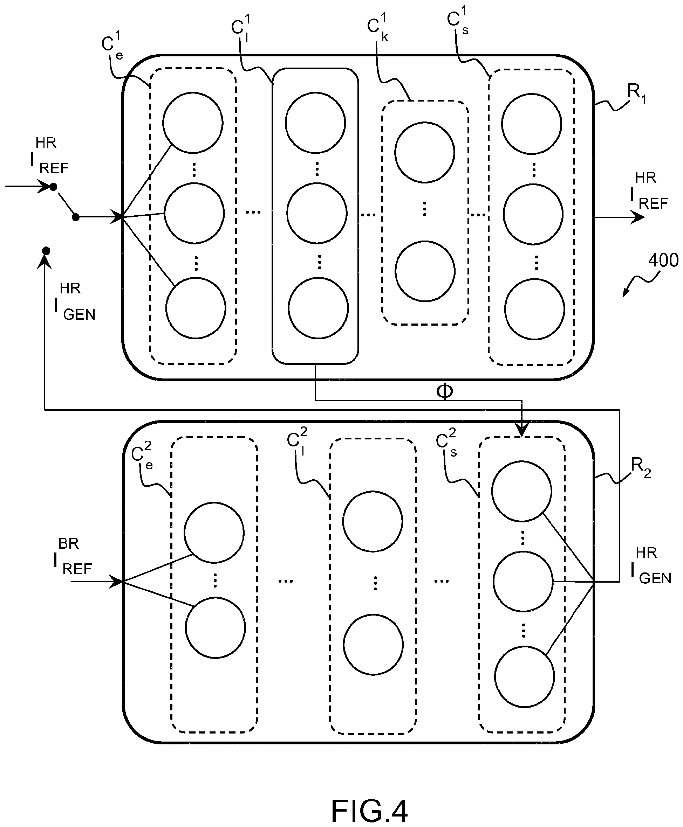

La figure 4 schématise un deuxième mode de réalisation du dispositif 400 selon l'invention dans lequel le premier réseau R₁ est un réseau auto-encodeur, le second réseau R₂ étant identique à celui de la figure 2.

Un réseau auto-encodeur, tel que le premier réseau R₁ décrit à la figure 4 est un type particulier de réseau de neurones artificiels qui a pour fonction de reconstruire en sortie une image reçue en entrée, en compressant d'abord l'image d'entrée puis en reconstruisant l'image compressée. Un tel réseau auto-encodeur est composé d'un premier sous-réseau codeur et un d'un second sous-réseau décodeur. Le premier sous-réseau codeur comprend une couche d'entrée qui comporte un nombre de neurones égal au nombre de pixels de l'image d'entrée et une couche de sortie qui comporte un nombre inférieur de neurones de sorte à obtenir une image de sortie compressée par rapport à l'image d'entrée. Les couches intermédiaires du sous-réseau codeur comprennent des nombres de neurones décroissants progressivement entre la couche d'entrée et la couche de sortie. Le sous-réseau décodeur est connecté en série du sous-réseau codeur. Sa couche d'entrée C¹ₖ correspond à la couche de sortie du sous-réseau codeur et ses couches intermédiaires comprennent des nombres de neurones croissants progressivement entre la couche d'entrée et la couche de sortie qui est de taille identique à celle de la couche d'entrée du sous-réseau codeur.

Lors de l'apprentissage du réseau auto-encodeur R₁, l'erreur calculée par les neurones de sortie est une erreur entre la valeur du neurone et la valeur du pixel attendu qui est la valeur correspondante du pixel de l'image d'entrée. Ainsi, le réseau auto-encodeur R₁ est entrainé à apprendre à reconstruire l'image d'entrée après qu'elle ait été compressée. La compression de l'image d'entrée via les premières couches intermédiaires du sous-réseau codeur permet de générer, sur les poids synaptiques correspondants, des caractéristiques pertinentes communes aux images de haute résolution. Ainsi, le vecteur Φ est extrait de la première couche du sous-réseau codeur pour être utilisé pour améliorer l'apprentissage du second réseau R₂ de la même façon que pour le dispositif décrit à la figure 2.

Dans ce deuxième mode de réalisation de l'invention, le réseau auto-encodeur R₁ peut recevoir en entrée soit uniquement des images de référence haute résolution I^{HR}_{REF}, soit uniquement des images haute résolution I^{HR}_{GEN} générées par le second réseau R₂, soit les deux à la fois.

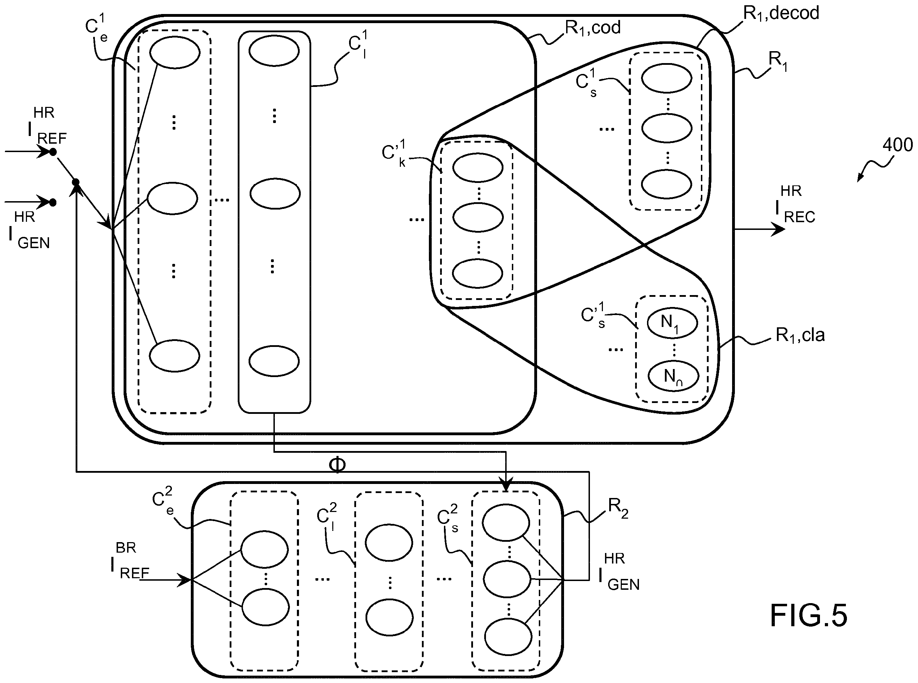

La figure 5 schématise un troisième mode de réalisation du dispositif 400 selon l'invention dans lequel le premier réseau R₁ est un réseau conjoint apte à réaliser simultanément une fonction d'auto-encodage et une fonction de classification, le second réseau R₂ étant identique à celui de la figure 2.

Dans ce troisième mode de réalisation, le premier réseau R₁ est un réseau conjoint qui est entrainé pour réaliser les deux fonctions respectives du réseau classifieur R₁ de la figure 3 et du réseau auto-encodeur R₁ de la figure 4. Ainsi, le premier réseau R₁ comprend un premier sous-réseau codeur R_{1,cod} et un deuxième sous-réseau décodeur R_{1,decod} qui forment ensemble un réseau auto-encodeur similaire à celui de la figure 4. Le premier réseau R₁ comprend également un troisième sous-réseau classifieur R_{1,cla} qui forme, avec le premier sous-réseau codeur R₁,_{cod}, un réseau classifieur similaire à celui de la figure 3. Sur le schéma de la figure 5, la couche intermédiaire C'¹ₖ correspond à une couche de sortie du premier sous-réseau codeur R₁,_{cod}, à une couche d'entrée du deuxième sous-réseau décodeur R_{1,decod} et à une couche intermédiaire du réseau classifieur formé du premier sous-réseau R₁,_{cod} et du troisième sous-réseau R_{1,cla}.

L'apprentissage du réseau conjoint R₁ est réalisé de la façon suivante. Lors de la phase de propagation des données, lorsque les données arrivent à la couche intermédiaire C'¹ₖ, elles sont propagées simultanément vers les couches du second sous-réseau et vers les couches du troisième sous-réseau. A l'issue de la phase de propagation de données, les couches de sortie C¹ₛ, C'¹ₛ respectives du deuxième et du troisième sous-réseau déterminent les mêmes types d'erreurs que les couches de sortie respectives du premier réseau R₁ de la figure 3 et du premier réseau R₁ de la figure 4. Les erreurs sont ensuite rétro-propagées vers les couches du deuxième et du troisième sous-réseau dans le sens inverse. Lorsque les erreurs sont rétro-propagées à la couche intermédiaire C'¹ₖ, les erreurs respectives provenant du deuxième et du troisième sous-réseau sont sommées puis la rétro-propagation se poursuit jusqu'à la première couche du premier sous-réseau R₁,_{cod} Par souci de clarté, on n'a pas représenté les connexions entre les neurones des différentes couches sur la figure 5. Il convient de préciser que les neurones de la couche intermédiaire C'¹ₖ sont connectés à la fois aux neurones de la première couche du deuxième sous-réseau et aux neurones de la première couche du troisième sous-réseau. Le reste du fonctionnement du dispositif 500 selon l'invention est identique à ce qui a été décrit pour les figures 2,3 et 4. En particulier, le vecteur Φ est extrait de la première couche du sous-réseau codeur pour être utilisé pour améliorer l'apprentissage du second réseau R₂ de la même façon que pour le dispositif décrit à la figure 2.

Les schémas des figures 2,3,4 et 5 représentent le dispositif selon l'invention lors de sa phase d'apprentissage. Lorsque l'apprentissage est terminé et que la fonction de transfert du second réseau R₂ est figée, le second réseau de neurones R₂ peut être utilisé pour convertir des images à basse résolution en images à haute résolution. Dans cette seconde phase opérationnelle, le dispositif de conversion d'images selon l'invention peut ne comprendre que le second réseau R₂, puisque le premier réseau R₁ ne sert qu'à la phase d'apprentissage.

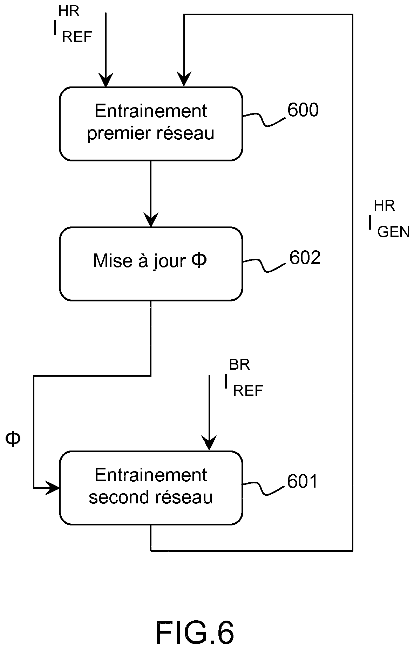

La figure 6 schématise les étapes principales de mise en œuvre d'un procédé d'apprentissage du second réseau de neurones artificiels R₂ pour convertir une image basse résolution en une image haute résolution.

Le procédé d'apprentissage comprend principalement une étape 600 d'entrainement ou d'apprentissage du premier réseau R₁ au cours de laquelle est mis à jour 602 un vecteur Φ de caractéristiques représentatives des images haute résolution et une étape 601 d'entrainement ou d'apprentissage du second réseau R₂ à partir du vecteur Φ. L'étape 601 d'entrainement du second réseau permet de générer des images haute résolution qui servent en tant que données d'apprentissage du premier réseau. Ainsi, les étapes 600 et 601 sont exécutées en parallèle, le vecteur Φ étant évolutif et généré au cours de l'apprentissage du premier réseau et étant mis à jour pour être utilisé au cours de l'apprentissage du second réseau. Ainsi, plusieurs itérations des étapes 600,602 et 601 sont effectuées selon le nombre d'images de référence produites en entrée du premier et du second réseau pour réaliser leur apprentissage.

De façon générale, l'invention peut être mise en œuvre à l'aide de composants matériels et/ou logiciels. Les éléments logiciels peuvent être disponibles en tant que produit programme d'ordinateur sur un support lisible par ordinateur, support qui peut être électronique, magnétique, optique ou électromagnétique. Les éléments matériels peuvent être disponibles tous ou en partie, notamment en tant que circuits intégrés dédiés (ASIC) et/ou circuits intégrés configurables (FPGA) et/ou en tant que circuits neuronaux selon l'invention ou en tant que processeur de signal numérique DSP et/ou en tant que processeur graphique GPU, et/ou en tant que microcontrôleur et/ou en tant que processeur général par exemple.

Les images produites en entrée du dispositif selon l'invention peuvent être acquises par un capteur d'images, une caméra, un appareil photographique, un imageur satellite ou tout autre dispositif de capture d'images.

## Revendications

1. Dispositif de super-résolution pour la conversion d'une image à une première résolution basse en une image à une seconde résolution haute comprenant un premier réseau (R₁) de neurones artificiels configuré pour déterminer, au cours d'un apprentissage défini selon une règle d'apprentissage prédéterminée, un vecteur (Φ), évolutif au cours de l'apprentissage, de caractéristiques représentatives d'images à la seconde résolution haute et un second réseau (R₂) de neurones artificiels configuré pour convertir une image à la première résolution basse en une image générée à la seconde résolution haute, le second réseau (R₂) étant entrainé lors d'une phase d'apprentissage, pendant laquelle il reçoit au moins une image de référence (I^{BR}_{REF}) à la première résolution basse, de manière à minimiser une erreur entre les projections respectives, dans un espace défini par ledit vecteur (Φ) de caractéristiques, de l'image de référence (I^{HR}_{REF}) à la seconde résolution haute et de l'image générée (I^{HR}_{GEN}) par le second réseau à la seconde résolution haute à partir de l'image de référence (I^{BR}_{REF}) à la première résolution basse, l'apprentissage du premier réseau (R₁) de neurones artificiels et l'apprentissage du second réseau (R₂) de neurones artificiels étant exécutés en parallèle, ledit vecteur (Φ) de caractéristiques étant mis à jour au cours de l'apprentissage du premier réseau (R₁) de neurones artificiels pour être utilisé au cours de l'apprentissage du second réseau (R₂) de neurones artificiels, ledit vecteur (Φ) de caractéristiques étant le vecteur des poids synaptiques de la première couche du premier réseau (R₁) de neurones artificiels.

2. Dispositif de super-résolution selon la revendication 1 dans lequel lesdites projections sont extraites des sorties des neurones de la couche du premier réseau (R₁) correspondant au vecteur (Φ) de caractéristiques.

3. Dispositif de super-résolution selon l'une des revendications précédentes dans lequel la phase d'apprentissage du premier réseau (R₁) est réalisée pour un ensemble d'images produites en entrée du premier réseau (R₁) et prises parmi un premier ensemble d'images de référence (I^{HR}_{REF}) à la seconde résolution haute et/ou un second ensemble d'images générées (I^{HR}_{GEN}) par le second réseau (R₂) à la seconde résolution haute durant la phase d'apprentissage du second réseau (R₂).

4. Dispositif de super-résolution selon la revendication 3 dans lequel le premier réseau (R₁) est un réseau classifieur configuré pour classifier des images selon leur appartenance audit premier ensemble d'images ou audit second ensemble d'images.

5. Dispositif de super-résolution selon la revendication 3 dans lequel le premier réseau (R₁) est un réseau auto-encodeur configuré pour reconstruire une image d'entrée.

6. Dispositif de super-résolution selon la revendication 3 dans lequel le premier réseau (R₁) comprend un premier sous-réseau codeur, un deuxième sous-réseau décodeur dont la couche d'entrée est connectée à la couche de sortie du premier sous-réseau codeur et un troisième sous-réseau classifieur dont la couche d'entrée est connectée à la couche de sortie du premier sous-réseau codeur, le premier sous-réseau codeur et le deuxième sous-réseau décodeur formant un réseau auto-encodeur configuré pour reconstruire l'image d'entrée, le premier sous-réseau codeur et le troisième sous-réseau classifieur formant un réseau classifieur configuré pour classifier des images selon leur appartenance audit premier ensemble d'images ou audit second ensemble d'images.

7. Dispositif de super-résolution selon l'une des revendications 3 à 6 dans lequel le dispositif est configuré pour exécuter plusieurs itérations des apprentissages successifs du premier réseau (R₁) et du second réseau (R₂).

8. Dispositif de super-résolution selon la revendication 5 dans lequel l'ensemble d'images produites en entrée du premier réseau (R₁) est le premier ensemble d'images de référence (I^{HR}_{REF}).

9. Procédé d'apprentissage d'un réseau de neurones artificiels pour convertir une image à une première résolution basse en une image à une seconde résolution haute comprenant les étapes exécutées simultanément de :
- Entrainer (600) un premier réseau (R₁) de neurones artificiels selon une règle d'apprentissage prédéterminée de manière à déterminer, au cours de l'apprentissage, un vecteur (Φ) de caractéristiques représentatives d'images à la seconde résolution haute, le vecteur (Φ) évoluant au cours de l'apprentissage, ledit vecteur (Φ) de caractéristiques étant le vecteur des poids synaptiques de la première couche du premier réseau (R₁) de neurones artificiels.
- Entrainer (601) un second réseau (R₂) de neurones artificiels à convertir au moins une image de référence (I^{BR}_{REF}) à la première résolution basse en au moins une image générée (I^{HR}_{GEN}) à la seconde résolution haute, de manière à minimiser une erreur entre les projections respectives, dans un espace défini par ledit vecteur (Φ) de caractéristiques, de l'image de référence (I^{HR}_{REF}) à la seconde résolution haute et de l'image générée (I^{HR}_{GEN}) par le second réseau à la seconde résolution haute à partir de l'image de référence (I^{BR}_{REF}) à la première résolution basse,
- Mettre à jour (602) ledit vecteur (Φ) de caractéristiques au cours de l'apprentissage du premier réseau (R₁) de neurones artificiels pour être utilisé au cours de l'apprentissage du second réseau (R₂) de neurones artificiels,

10. Procédé d'apprentissage selon la revendication 9 comprenant une étape de calcul desdites projections respectives par extraction des valeurs de sortie des neurones de la couche du premier réseau correspondant au vecteur (Φ) de caractéristiques.

11. Procédé d'apprentissage selon l'une des revendications 9 ou 10 dans lequel l'entrainement du premier réseau (R₁) est réalisé pour un ensemble d'images produites en entrée du premier réseau (R₁) et prises parmi un premier ensemble d'images de référence (I^{HR}_{REF}) à la seconde résolution haute et/ou un second ensemble d'images générées (I^{HR}_{GEN}) par le second réseau (R₂) à la seconde résolution haute durant la phase d'apprentissage du second réseau.

12. Procédé d'apprentissage selon la revendication 11 dans lequel le premier réseau (R₁) est entrainé pour classifier des images selon leur appartenance audit premier ensemble d'images ou audit second ensemble d'images et/ou pour reconstruire une image d'entrée.

13. Procédé d'apprentissage selon l'une des revendications 11 ou 12 comprenant plusieurs itérations des étapes successives d'entrainement du premier réseau et d'entrainement du second réseau.

14. Procédé de super-résolution comprenant la conversion d'au moins une image à une première résolution basse en une image générée à une seconde résolution haute au moyen d'un réseau de neurones artificiels (R₂) entrainé par le procédé d'apprentissage selon l'une quelconque des revendications 9 à 13.

15. Programme d'ordinateur téléchargeable depuis un réseau de communication et/ou enregistré sur un support lisible par ordinateur et/ou exécutable par un processeur, **caractérisé en ce qu'**il comprend des instructions de code pour l'exécution des étapes d'un procédé selon l'une quelconque des revendications 9 à 14, lorsque ledit programme est exécuté sur un ordinateur.

16. Réseau (R₂) de neurones artificiels configuré pour convertir une image à une première résolution basse en une image générée à une seconde résolution haute, ledit réseau (R₂) étant entrainé par le procédé d'apprentissage selon l'une quelconque des revendications 9 à 13

## Patentansprüche

1. Superauflösungsvorrichtung zum Umwandeln eines Bildes einer ersten niedrigen Auflösung in ein Bild einer zweiten hohen Auflösung, umfassend ein erstes Netzwerk (R₁) künstlicher Neuronen, welches konfiguriert ist, um während eines gemäß einer vorbestimmten Lernregel definierten Lernvorgangs einen sich im Zuge des Lernvorgangs entwickelnden Vektor (Φ) von Merkmalen zu bestimmen, welche repräsentativ für Bilder mit der zweiten hohen Auflösung sind, und ein zweites Netzwerk (R₂) künstlicher Neuronen, welches konfiguriert ist, um ein Bild mit der ersten niedrigen Auflösung in ein Bild umzuwandeln, welches mit der zweiten hohen Auflösung erzeugt wird, wobei das zweite Netzwerk (R₂) während einer Lernphase trainiert wird, während welcher es mindestens ein Referenzbild (I^{BR}_{REF}) mit der ersten niedrigen Auflösung empfängt, um einen Fehler zwischen den jeweiligen Projektionen in einem durch den Merkmalsvektor (Φ) definierten Raum zu minimieren, des Referenzbildes (I^{HR}_{REF}) mit der zweiten hohen Auflösung und des durch das zweite Netzwerk mit der zweiten hohen Auflösung anhand des Referenzbildes (I^{BR}_{REF}) erzeugten Bildes (I^{HR}_{GEN}) mit der ersten niedrigen Auflösung, wobei der Lernvorgang des ersten Netzwerks (R₁) künstlicher Neuronen und der Lernvorgang des zweiten Netzwerks (R₂) künstlicher Neuronen parallel ausgeführt werden, wobei der Merkmalsvektor (Φ) während des Lernvorgangs des ersten Netzwerks (R₁) künstlicher Neuronen aktualisiert wird, um während des Lernvorgangs des zweiten Netzwerks (R₂) künstlicher Neuronen verwendet zu werden, wobei der Merkmalsvektor (Φ) der Vektor der synaptischen Gewichte der ersten Schicht des ersten Netzwerks (R₁) künstlicher Neuronen ist.

2. Superauflösungsvorrichtung nach Anspruch 1, wobei die Projektionen aus den Ausgängen der Neuronen der Schicht des ersten Netzwerks (R₁) extrahiert werden, welche dem Merkmalsvektor (Φ) entspricht.

3. Superauflösungsvorrichtung nach einem der vorhergehenden Ansprüche, wobei die Lernphase des ersten Netzwerks (R₁) für eine Gruppe von am Eingang des ersten Netzwerks (R₁) erzeugten und aus einer ersten Gruppe von Referenzbildern (I^{HR}_{REF}) mit der zweiten hohen Auflösung genommenen Bildern durchgeführt wird, und/oder für eine zweite Gruppe von durch das zweite Netzwerk (R₂) mit der zweiten hohen Auflösung während der Lernphase des zweiten Netzwerks (R₂) erzeugten Bildern (I^{HR}_{GEN}).

4. Superauflösungsvorrichtung nach Anspruch 3, wobei das erste Netzwerk (R₁) ein Klassifizierungsnetzwerk ist, welches zum Klassifizieren von Bildern gemäß ihrer Zugehörigkeit zu der ersten Gruppe von Bildern oder zu der zweiten Gruppe von Bildern konfiguriert ist.

5. Superauflösungsvorrichtung nach Anspruch 3, wobei das erste Netzwerk (R₁) ein selbstcodierendes Netzwerk ist, welches zum Rekonstruieren eines Eingangsbildes konfiguriert ist.

6. Superauflösungsvorrichtung nach Anspruch 3, wobei das erste Netzwerk (R₁) ein erstes Codierer-Teilnetzwerk, ein zweites Decodierer-Teilnetzwerk umfasst, dessen Eingangsschicht mit der Ausgangsschicht des ersten Codierer-Teilnetzwerks verbunden ist, und ein drittes Klassifizierer-Teilnetzwerk, dessen Eingangsschicht mit der Ausgangsschicht des ersten Codierer-Teilnetzwerks verbunden ist, wobei das erste Codierer-Teilnetzwerk und das zweite Decodierer-Teilnetzwerk ein selbstcodierendes Netzwerk bilden, welches zum Rekonstruieren des Eingangsbildes konfiguriert ist, wobei das erste Codierer-Teilnetzwerk und das dritte Klassifizierer-Teilnetzwerk ein Klassifizierer-Netzwerk bilden, welches zum Klassifizieren von Bildern gemäß ihrer Zugehörigkeit zu der ersten Gruppe von Bildern oder zu der zweiten Gruppe von Bildern konfiguriert ist.

7. Superauflösungsvorrichtung nach einem der Ansprüche 3 bis 6, wobei die Vorrichtung konfiguriert ist, um mehrere Iterationen der aufeinanderfolgenden Lernvorgänge des ersten Netzwerks (R₁) und des zweiten Netzwerks (R₂) auszuführen.

8. Superauflösungsvorrichtung nach Anspruch 5, wobei die Gruppe von am Eingang des ersten Netzwerks (R₁) erzeugten Bildern die erste Gruppe von Referenzbildern (I^{HR}_{REF}) ist.

9. Lernverfahren eines Netzwerks künstlicher Neuronen zum Umwandeln eines Bildes mit einer ersten niedrigen Auflösung in ein Bild mit einer zweiten hohen Auflösung, umfassend folgende gleichzeitig ausgeführten Schritte:
- Trainieren (600) eines ersten Netzwerks (R₁) künstlicher Neuronen gemäß einer vorbestimmten Lernregel, um im Zuge des Lernvorgangs einen Vektor (Φ) von Merkmalen zu bestimmen, welche repräsentativ für Bilder mit der zweiten hohen Auflösung sind, wobei sich der Vektor (Φ) im Zuge des Lernvorgangs entwickelt, wobei der Merkmalsvektor (Φ) der Vektor der synaptischen Gewichte der ersten Schicht des ersten Netzwerks (R₁) künstlicher Neuronen ist.
- Trainieren (601) eines zweiten Netzwerks (R₂) künstlicher Neuronen zum Umwandeln mindestens eines Referenzbildes (I^{BR}_{REF}) mit der ersten niedrigen Auflösung in mindestens ein mit der zweiten hohen Auflösung erzeugtes Bild (I^{HR}_{GEN}), um einen Fehler zwischen den jeweiligen Projektionen in einem Raum zu minimieren, welcher durch den Merkmalsvektor (Φ) definiert ist, des Referenzbildes (I^{HR}_{REF}) mit der zweiten hohen Auflösung und des durch das zweite Netzwerk mit der zweiten hohen Auflösung anhand des Referenzbildes (I^{BR}_{REF}) mit der ersten niedrigen Auflösung erzeugten Bildes,
- Aktualisieren (602) des Merkmalsvektors (Φ) im Zuge des Lernvorgangs des ersten Netzwerks (R₁) künstlicher Neuronen, zwecks Verwendung im Zuge des Lernvorgangs des zweiten Netzwerks (R₂) künstlicher Neuronen.

10. Lernverfahren nach Anspruch 9, umfassend einen Schritt des Berechnens der jeweiligen Projektionen durch Extraktion der Ausgangswerte der Neuronen der Schicht des ersten Netzwerks, welche dem Merkmalsvektor (Φ) entspricht.

11. Lernverfahren nach einem der Ansprüche 9 oder 10, wobei das Training des ersten Netzwerks (R₁) für eine Gruppe von am Eingang des ersten Netzwerks (R₁) erzeugten und aus einer ersten Gruppe von Referenzbildern (I^{HR}_{REF}) mit der zweiten hohen Auflösung genommenen Bildern durchgeführt wird, und/oder für eine zweite Gruppe von durch das zweite Netzwerk (R₂) mit der zweiten hohen Auflösung während der Lernphase des zweiten Netzwerks erzeugten Bildern (I^{HR}_{GEN}).

12. Lernverfahren nach Anspruch 11, wobei das erste Netzwerk (R₁) zum Klassifizieren von Bildern gemäß ihrer Zugehörigkeit zu der ersten Gruppe von Bildern oder zu der zweiten Gruppe von Bildern und/oder zum Rekonstruieren eines Eingangsbildes trainiert wird.

13. Lernverfahren nach einem der Ansprüche 11 oder 12, umfassend mehrere Iterationen der aufeinanderfolgenden Schritte des Trainings des ersten Netzwerks und des Trainings des zweiten Netzwerks.

14. Superauflösungsverfahren, umfassend die Umwandlung mindestens eines Bildes mit einer ersten niedrigen Auflösung in ein erzeugtes Bild einer zweiten hohen Auflösung mithilfe eines Netzwerks (R₂) künstlicher Neuronen, welches durch das Lernverfahren nach einem der Ansprüche 9 bis 13 trainiert wird.

15. Über ein Kommunikationsnetzwerk downloadbares und/oder auf einem computerlesbaren Träger gespeichertes und/oder durch einen Prozessor ausführbares Computerprogramm, **dadurch gekennzeichnet, dass** es Programmecode-Befehle zur Ausführung der Schritte eines Verfahrens nach einem der Ansprüche 9 bis 14 umfasst, wenn das Programm auf einem Computer ausgeführt wird.

16. Netzwerk (R₂) künstlicher Neuronen, welches konfiguriert ist, um ein Bild mit einer ersten niedrigen Auflösung in ein erzeugtes Bild einer zweiten hohen Auflösung umzuwandeln, wobei das Netzwerk (R₂) durch das Lernverfahren nach einem der Ansprüche 9 bis 13 trainiert wird.

## Claims

1. A super-resolution device for converting an image at a first low resolution into an image at a second high resolution, comprising a first network (R₁) of artificial neurons configured to determine, during a learning phase defined according to a predetermined learning rule, a vector (Φ), which evolves during the learning phase, of features representing images at the second high resolution and a second network (R₂) of artificial neurons configured to convert an image at the first low resolution into an image generated at the second high resolution, the second network (R₂) being trained during a learning phase, during which it receives at least one reference image (I^{BR}_{REF}) at the first low resolution, so as to minimise an error between the respective projections, in a space defined by said vector (Φ) of features, of the reference image (I^{HR}_{REF}) at the second high resolution and of the image (I^{HR} _{GEN}) generated by the second network at the second high resolution from the reference image (I^{BR}_{REF}) at the first low resolution, with the learning phase of the first network (R₁) of artificial neurons and the learning phase of the second network (R₂) of artificial neurons being executed at the same time, said vector (Φ) of features being updated during the learning phase of the first network (R₁) of artificial neurons in order to be used during the learning phase of the second network (R₂) of artificial neurons, said vector (Φ) of features being the vector of the synaptic weights of the first layer of the first network (R₁) of artificial neurons.

2. The super-resolution device according to claim 1, wherein said projections are extracted from the outputs of the neurons of the layer of the first network (R₁) corresponding to the vector (Φ) of features.

3. The super-resolution device according to any of the preceding claims, wherein the learning phase of the first network (R₁) is carried out for a set of images produced at the input of the first network (R₁) and taken from among a first set of reference images (I^{HR}_{REF}) at the second high resolution and/or a second set of images (I^{HR}_{GEN}) generated by the second network (R₂) at the second high resolution during the learning phase of the second network (R₂).

4. The super-resolution device according to claim 3, wherein the first network (R₁) is a classifier network configured to classify images depending on their affiliation with said first set of images or with said second set of images.

5. The super-resolution device according to claim 3, wherein the first network (R₁) is an auto-encoder network configured to reconstruct an input image.

6. The super-resolution device according to claim 3, wherein the first network (R₁) comprises a first coder sub-network, a second decoder sub-network, the input layer of which is connected to the output layer of the first coder sub-network, and a third classifier sub-network, the input layer of which is connected to the output layer of the first coder sub-network, the first coder sub-network and the second decoder sub-network forming an auto-encoder network configured to reconstruct the input image, the first coder sub-network and the third classifier sub-network forming a classifier network configured to classify images depending on their affiliation with said first set of images or with said second set of images.

7. The super-resolution device according to any of claims 3 to 6, wherein the device is configured to execute several iterations of the successive learning phases of the first network (R₁) and of the second network (R₂).

8. The super-resolution device according to claim 5, wherein the set of images produced at the input of the first network (R₁) is the first set of reference images (I^{HR}_{REF}).

9. A learning method for an artificial neural network for converting an image at a first low resolution into an image at a second high resolution, comprising the simultaneously executed steps of:
- training (600) a first network (R₁) of artificial neurons according to a predetermined learning rule so as to determine, during the learning phase, a vector (Φ) of features representing images at the second high resolution, the vector (Φ) evolving during the learning phase, said vector (Φ) of features being the vector of the synaptic weights of the first layer of the first network (R₁) of artificial neurons;
- training (601) a second network (R₂) of artificial neurons to convert at least one reference image (I^{BR}_{REF}) at the first low resolution into at least one image (I^{HR}_{GEN}) generated at the second high resolution, so as to minimise an error between the respective projections, in a space defined by said vector (Φ) of features, of the reference image (I^{HR}_{REF}) at the second high resolution and of the image (I^{HR}_{GEN}) generated by the second network at the second high resolution from the reference image (I^{BR}_{REF}) at the first low resolution;
- updating (602) said vector (Φ) of features during the learning phase of the first network (R₁) of artificial neurons in order to be used during the learning phase of the second network (R₂) of artificial neurons.

10. The learning method according to claim 9, comprising a step of computing said respective projections by extracting the output values from the neurons of the layer of the first network corresponding to the vector (Φ) of features.

11. The learning method according to any of claims 9 or 10, wherein the first network (R₁) is trained for a set of images produced at the input of the first network (R₁) and taken from among a first set of reference images (I^{HR}_{REF}) at the second high resolution and/or a second set of images (I^{HR}_{GEN}) generated by the second network (R₂) at the second high resolution during the learning phase of the second network.

12. The learning method according to claim 11, wherein the first network (R₁) is trained in order to classify images depending on their affiliation with said first set of images or with said second set of images and/or to reconstruct an input image.

13. The learning method according to any of claims 11 or 12, comprising several iterations of the successive steps of training the first network and of training the second network.

14. A super-resolution method comprising converting at least one image at a first low resolution into an image generated at a second high resolution by means of a network (R₂) of artificial neurons trained by the learning method according to any one of claims 9 to 13.

15. A computer program downloadable from a communication network and/or recorded on a computer-readable medium and/or executable by a processor, **characterized in that** it comprises code instructions for executing the steps of a method according to any one of claims 9 to 14, when said program is executed on a computer.

16. A network (R₂) of artificial neurons configured to convert an image at a first low resolution into an image generated at a second high resolution, said network (R₂) being trained by the learning method according to any one of claims 9 to 13.
